Europäisches Patentamt

European Patent Office

Office européen des brevets

(11) Publication number: **0 152 207**
**B1**

(12) **EUROPEAN PATENT SPECIFICATION**

(45) Date of publication of patent specification: **26.07.89**

(21) Application number: **85300503.1**

(22) Date of filing: **25.01.85**

(51) Int. Cl.⁴: **G 21 C 3/32**

(54) **Retaining pin for nuclear reactor guide tube mounts.**

(30) Priority: **03.02.84 US 576645**

(43) Date of publication of application:
**21.08.85 Bulletin 85/34**

(45) Publication of the grant of the patent:
**26.07.89 Bulletin 89/30**

(84) Designated Contracting States:
**BE DE FR SE**

(56) References cited:
**EP-A-0 130 840**
**FR-A-2 265 151**
**FR-A-2 319 956**
**FR-A-2 374 547**
**FR-A-2 399 715**
**FR-A-2 531 563**
**GB-A-2 076 580**

**NUCLEAR ENGINEERING INTERNATIONAL,
vol. 29, no. 362, November 1984, pages 29-33,
Sutton, Surrey, GB; L. GUICHERD et al.:
"Dealing with control rod guide tube support
pin cracking in French PWRs**

(73) Proprietor: **WESTINGHOUSE ELECTRIC
CORPORATION
Westinghouse Building Gateway Center
Pittsburgh Pennsylvania 15235 (US)**

(72) Inventor: **Land, John Thomas
4020 Bedevere Drive
Pensacola Florida (US)**
Inventor: **Hopkins, Ronald Jacobs
8270 Strasburg Road
Pensacola Florida (US)**
Inventor: **Martinez, Jose Manuel
7428 Camale Drive
Pensacola Florida (US)**

(74) Representative: **van Berlyn, Ronald Gilbert
23, Centre Heights
London, NW3 6JG (GB)**

Courier Press, Leamington Spa, England.

## Description

The present invention relates generally to nuclear reactors, and more particularly to a retaining pin and locking device system for utilization in connection with nuclear reactor control rod guide tubes within existing operation plants or facilities in order to fixedly secure the control rod guide tubes, by means of their annular flanged portions, to the upper surface of the upper core plate of the reactor by means of a non-welded mechanical system.

Within a nuclear reactor, the upper boundary of the reactor core is defined by means of the upper core plates, to the undersurface of which the upper ends of the nuclear reactor core fuel assemblies are connected. The core contains fuel assemblies comprised of fuel rods within which the nuclear fuel pellets are disposed. Each fuel assembly has a number of tubes adapted to receive nuclear reactor control rods for controlling the power output of the fuel assemblies and the reactor core. Movement of the nuclear reactor control rods is accomplished by means of control rod drive mechanisms (CRDMs) through the intermediary of control rod drive shafts which extend through the nuclear reactor pressure vessel.

Vertically spaced above the nuclear reactor upper core plate there is disposed the nuclear reactor upper support plate, and between the upper support plate and the upper core plate there is defined the upper plenum chamber through which nuclear reactor core coolant is conducted for subsequent flow through the reactor core coolant loop and heat exchange system which is external of the nuclear reactor pressure vessel and core barrel. In view of the fact that the nuclear reactor control rods may be disposed within the upper plenum chamber when, for example, particular control rods are withdrawn vertically upwardly out of the core, or alternatively, when the control rods are lowered into the core their respective drive shafts will be disposed within the upper plenum chamber, protection for the control rods or their drive rods within the upper plenum chamber must be provided with respect to the cross-currents of the flowing nuclear reactor core coolant. Such protection is in fact provided through means of guide or shroud tubes which are interposed between, and fixedly connected to, the upper surface of the upper core plate and the upper support plate.

For properly positioning the guide tubes on the upper core plate, the guide tubes are provided with annular flanges at the lower ends thereof, and guide tube retaining pins locate the guide tube flanges with respect to the upper core plate. The vertically disposed guide tube retaining pins have lower portions which are frictionally engaged within suitable bores defined within the upper core plate, and the upper bolt or stud portion of each guide tube retaining pin is threadedly engaged with a suitable, internal hexagonal nut, counterbored portions of the guide tube flange being engaged between a shoulder portion of the shank and the mated nut of the pin. In order to prevent the retrograde rotation of the nut relative to the retaining pin whereby the nut may possible become disengaged from the threaded stud portion of the guide tube retaining pin, a dowel pin is conventionally passed through the nut and welded to a tab which is fixedly secured to the retaining pin.

Such a guide pin is shown in prior, not prepublished EP—A—0 130 840. That publication also points out the stress corrosion problems encountered with the pin. It is noted that, while the aforenoted conventional guide tube retaining pin positions the nuclear reactor control rod guide tubes within the upper core plate, stress corrosion cracking problems have been observed to have developed within the retaining pins leading to failure of the same. Consequently, the retaining pins require repair or replacement, however, due to the fact that such retaining pin and locking systems are now disposed within operating plants and are located in an irradiated, underwater environment, remotely controlled welding operations, are extremely difficult to achieve, particularly in light of the small structural components which comprise the retaining pin and locking system, and the confined area within which the welding apparatus would have to be disposed and within which the welding operations would have to be performed. In addition, while underwater welding operations per se have of course been performed, such conventional apparatus and techniques could be employed only with high radiation exposure to personnel.

Accordingly, it is the principal object of the present invention to provide a new and improved nuclear reactor guide tube retaining pin and pin locking system, which provides good corrosion resistance for the pin and which, additionally facilitates mechanical securing and locking of the retaining pin by remote handling equipment.

With this object in view, the present invention resides in a retaining pin assembly adapted to be fastened to nuclear reactor control rod guide tube flanges having passages with counterbores each of a predetermined diameter and adapted to receive a portion of the retaining pin, said retaining pin having an intermediate shoulder adapted to be fittingly received in said counterbore for engagement with said guide tube flange, a base section extending axially from said shoulder and adapted to be received in a bore in a member on which said guide tube flange is to be disposed, a stressable shank extending from said shoulder in an axial direction opposite said base section and adapted to be received in one of said guide tube flange passages, said shank portion having a diameter smaller than that of said passages such that an annular flange space is formed between said shank and the guide tube flange passage wall, said pin having a threaded stud portion adapted to receive a nut for mounting said retaining pin on said guide tube flange, wherein said nut has an axially projecting skirt with an inner diameter larger than the diameter of said shank such that an annular nut space if formed between said skirt and said shank which annular nut space is in open communication with the annular flange space when said pin is installed and said nut skirt is seated on said tube flange and that flow apertures are formed in said skirt so as to permit exchange of coolant in said annular space around said shank within said flange.

Rotation of the nut with respect to the retaining pin is effected by means of a tool engaging external splines formed on the outer periphery of the nut, and in order to insure the fact that, once the nut is fully threadedly engaged with the retaining pin under predetermined torque load conditions, retrograde rotation of the nut relative to the retaining pin cannot be experienced, a locking cap fixedly interconnects the ..nut and retaining pin. In particular, a plurality of holes are provided within the upper external peripheral sidewall portion of the nut, and a stepped cap is provided which has its lower skirt portion crimped into four of the holes defined within the nut such that crimped connections are now defined between the cap and the nut at 90° circumferentially spaced locations. The cap is provided with a central through-bore for accommodating the upstanding projecting portion of the retaining pin, and this projecting portion of the retaining pin has four longitudinally or axially extending grooves defined upon its external surface. The external grooves defined within the retaining pin are arranged at 90° intervals about the retaining pin axis, and the upstanding portion of the cap is then crimped, at diametrically opposite areas thereof into two of the four retaining pin grooves thereby defining crimped connections between the retaining pin and the crimped cap. In this manner, through means of the intermediary crimped cap, relative rotation of the elongated locking nut with respect to the retaining pin is effectively prevented.

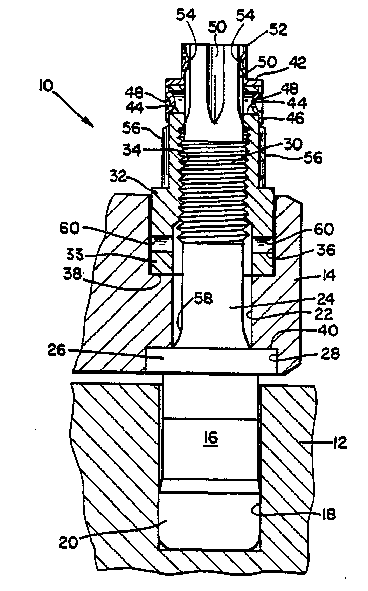

The invention will become more readily apparent from the following detailed description of a preferred embodiment thereof shown, by way of example only, in the accompanying drawing, wherein:

The sole figure is a vertical cross-sectional view of the replacement retaining pin and locking nut-cap system constructed in accordance with the present invention and showing the cooperative parts thereof.

Referring now to the drawing, there is shown in the sole figure a replacement retaining pin and locking nut-cap system indicated by the reference character 10, and showing the cooperative parts thereof for use within existing operating nuclear reactor power plants or facilities for securing nuclear reactor control rod guide tubes to the nuclear reactor upper core plate 12 when existing, conventional welded guide tube retaining pin systems require replacement due to failure under, for example, stress corrosion cracking conditions. The nuclear reactor control rod guide tubes are secured to the nuclear reactor upper core plate 12 through means of radially outwardly projecting annular flanged portions 14 formed about the lower periphery of each guide tube, and in order to actually interconnect the guide tube flanged portion 14 to the upper core plate 12, a plurality of vertically disposed retaining pins 16 are utilized, only one such pin 16 being shown, it nevertheless being understood that the pins 16 are disposed in a circumferential array within the annular guide tube flanged portion 14.

In order to accommodate the retaining pins 16, the upper surface of the upper core plate 12 is provided, at each locus of a retaining pin 16, with a blind bore 18 within which the lower, split-leaf base section 20 of the retaining pin 16 is adapted to be frictionally inserted and retained. The guide tube flange 14 is provided, at each locus of a retaining pin 16, with a through-bore 22 for accommodating the intermediate shank portion 24 of the retaining pin 16, the bore 22 having a diameter larger than the diameter of the shank portion 24 so as to provide an annular space around the shank portion 24. The shank portion 24 and base section 20 of retaining pin 16 are integral with a shoulder portion 26 disposed in between. A counterbored or recessed portion 28 is defined within the lower surface of the guide tube flange 14 so as to be coaxially or concentrically disposed with respect to the guide tube through-bore 22, and in this manner, the retaining pin shoulder portion 26 is appropriately accommodated and seated within the lower surface of the guide tube flange 14.

An upper, externally threaded bolt or stud portion 30 projects vertically upwardly and axially outwardly from the guide tube flange through-bore 22, and is adapted to be threadedly mated with an annular, axially elongated, internally threaded nut 32, the threaded section thereof being disclosed at 34. The nut 32 will of course serve to fixedly retain the retaining pin 16 in its mounted mode upon the tube flange 14, and therefore securely position the nuclear reactor control rod guide tube upon the upper core plate 12. In order to therefore properly accommodate the securing nut 32 upon the threaded stud portion 30 of retaining pin 16, the upper surface or portion of guide tube flange 14 is provided, at each location of a retaining pin 16, with a second counterbored or recessed portion 36 which is coaxially or concentrically defined with respect to through-bore 22 and the lower or first counterbore 28. An annular floor surface 38 is thus defined within the guide tube flange 14 upon which the lower annular face of securing nut 32 is engaged and seated in a manner similar to the engagement and seating of the retaining pin shoulder portion 26 upon the annular ceiling surface 40 of guide tube flange counterbore 28. In this manner, when the securing nut 32 is threadedly engaged upon the externally threaded stud portion 30 of the pin 16, the guide tube flange 14 will be securely retained between the securing nut 32 and the pin flange 26 seated on engaging areas 38 and 40 of flange 14.

Once the securing nut 32 has been threaded onto the stud portion 30 of the retaining pin 16, and appropriately torqued to the predetermined value, a cap 42 is placed onto and engaged with pin 16 and the securing nut 32 thereby to prevent rotation of the nut 32 relative to pin 16. In particular, a circumferential array of apertures 44 is provided within the upper end of nut 32, and the cap 42 which has a peripheral skirt portion 46, is crimped at areas 48 formed at 90° intervals as to be operatively engaged within four of the nut apertures 44. This crimping operation may be performed at a location remote from the installation site within the nuclear reactor such that when the nut 32 is to be threadedly assembled upon the retaining pin 16, the nut 32 and crimped cap 42 are threadedly installed upon the retaining pin 16 as a pre-assembled unit.

It is further seen that the upper-most end of the retaining pin 16 above the threaded portion 30 thereof is provided with longitudinally or axially extending grooves 50 which are equiangularly spaced about the retaining pin 16 at 90° intervals. The cap 42 includes an axially projecting tubular portion 52 through which the upper end of the retaining pin 16 extends, and once the securing nut-crimped cap assemblage 32—42 is fully threaded upon the retaining pin 16 and the predetermined torque load has been attained, then diametrically opposed sections of the upstanding tubular portion 52 are crimped, as shown at 54, so as to operatively engage two· diametrically opposed grooves 50 of the retaining pin 16. This crimping must of course be performed in situ in the reactor that is it should be performed with the aid of suitable, remotely controlled tools, not shown, in order to prevent exposure of maintenance personnel to the irradiation.

As a result of the development and implementation of the presently invented nuclear reactor control rod guide tube retaining pin, securing nut, and crimped cap locking system 10, particularly in view of the protruding grooved portion of the retaining pin 16 relative to the securing nut 32, as well as the particular disposition of the crimped locking cap 42 upon the securing nut 32 and its engagement with the retaining pin 16 spatial restrictions did not permit the utilization of an internal hexagonal securing nut. The securing nut 32 as provided herewith has circumferentially spaced axial splines 56 formed on the external surface thereof. In this manner, a suitable splined torque tool, not shown, can axially engage the securing nut splines 56, and once engaged, torque can be applied thereto. Such splined torquing tool need not engage the securing nut 32 in a complete 360° annular relationship as would be true of a conventional external hexagonal torque wrench.

Once the retaining pin has been installed, in order to maintain the pin free from the effects of stress. corrosion it has been found advantageous to limit the particular torque load impressed thereon and to provide a radiused curvature at the transition section 58 between the retaining pin shank portion 24 and the annular shoulder portion 26 which reduces stress concentration. Also heat treatment processing of the entire retaining pin 16 is such so as to alleviate the tendency for stress corrosion cracking to develop.

In accordance with the present invention, corrosion crevice cracking as a result of the accumulation or collection of contaminants and debris within the relatively stagnant area around the retaining pin shank portion 24 is avoided by providing a plurality of radially extending flow holes or apertures 60 defined within a skirt 33 portion of the securing nut 32 which has a diameter larger than that of the shank 24 so as to be spaced from the pin 16 to permit coolant to flow through the region surrounding the pin shank portion 24. Any collection of contaminants and debris and undesirable coolant solution concentrations within such region surrounding the pin shank portion 24 are avoided thereby.

**Claims**

1. A retaining pin assembly adapted to be fastened to nuclear reactor control rod guide tube flanges (14) having passages (22) with counterbores (40) each of a predetermined diameter and adapted to receive a portion of the retaining pin (16), said retaining pin (16) having an intermediate shoulder (26) adapted to be fittingly received in said counterbore (40) for engagement with said guide tube flange, a base section (20) extending axially from said shoulder (26) and adapted to be received in a bore (18) in a member on which said guide tube flange (14) is to be disposed, a stressable shank (24) extending from said shoulder (26) in an axial direction opposite said base section (20) and adapted to be received in one of said guide tube flange passages (22), said shank portion (24) having a diameter smaller than that of said passages (22) such that an annular flange space is formed between said shank (24) and the guide tube flange passage wall, said pin (16) having a threaded stud portion (30) adapted to receive a nut (32) for mounting said retaining pin (16) on said guide tube flange (14), wherein said nut (32) has an axially projecting skirt (33) with an inner diameter larger than the diameter of said shank (24) such that an annular nut space is formed between said skirt (33) and said shank (24) which annular nut space is in open communication with the annular flange space when said pin (16) is installed and said nut skirt (33) is seated on said tube flange (14) and that flow apertures (60) are formed in said skirt (33) so as to permit exchange of coolant in said annular space around said shank (24) within said flange (14).

2. An assembly according to claim 1, characterized in that said flow apertures (60) are arranged opposite one another.

3. An assembly according to claim 1 or 2, characterized in that said nut (32) has axial splines (56) formed at its circumference so as to be engageable by an axial engagement tool for torquing down said nut (32).

4. An assembly according to claim 1, 2 or 3, characterized in that said pin (16) has axial grooves (50) formed at its end opposite its base section (50) permitting engagement of said pin (16) for holding said pin (16) when said nut (32) is torqued down.

5. An assembly according to claim 4, characterized in that said nut (32) has lock apertures (44) formed at its free axial end opposite said skirt (33), and a lock cup (42) is provided and formed so as to fit over the free end of said pin (16) and said nut (32), said lock cup (42) being adapted to be put in place by an axially extending handling tool and having sections adapted to be crimped into said nut lock apertures (44) and said pin grooves (50) for locking said nut (32) to said pin (16).

## Patentansprüche

1. Ein Haltestiftsatz zum Befestigen an Flanschen (14) von Steuerstab-Führungsrohren eines Kernreaktors, die Durchgänge (22) mit Gegenbohrungen (40) aufweisen, die alle einen vorbestimmten Duhrchmesser haben und zur Aufnahme eines Teiles des Haltestiftes (16) vorgesehen sind, der Haltestift (16) mit einer zwischenliegenden Schulter (26) versehen ist, die mit Paßsitz in die Gegenbohrung (40) eingesetzt den Flansch des Führungsrohres berührt, ein Basisteil (20) axial von der Schulter (26) absteht und in eine Bohrung (18) eines Bauteiles paßt, an das der Flansch (14) des Führungsrohres anzubringen ist, ein belastbarer Schaft (24) ausgehend von der Schulter (26) in axialer Richtung entgegengesetzt zum Basisteil (20) verläuft und zur Aufnahme in einem der Durchgänge (22) im Flansch des Führungsrohres ausgebildet ist, wobei der Durchmesser des Schaftes (24) kleiner ist als derjenige der Durchgänge (22), derart, daß ein ringförmiger Flanschraum zwischen dem Schaft (24) und der Wand des Durchganges des Flansches des Führungsrohres gebildet ist, der Stift (16) ein Gewindeteil (30) aufweist, auf das eine Mutter (32) aufschraubbar ist, um den Haltestift (16) am Flansch (14) des Führungsrohres zu montieren, wobei die Mutter (32) einen axial vorstehenden Rand (33) aufweist, dessen Innendurchmesser größer ist als der Durchmesser des Schaftes (24) derart, daß zwischen dem Randabschnitt (33) und dem Schaft (24) ein Ringraum für die Mutter gebildet ist, wobei dieser Raum in offener Verbindung mit dem ringförmigen Flanschraum steht, wenn der Stift (16) eingesetzt und der Randabschnitt (33) auf dem Flansch (24) sitzt, und daß ferner Durchflußausnehmungen (60) in dem Randabschnitt (33) vorgesehen sind, um den Austausch von Kühlmittel in dem Ringraum um den Schaft (24) innerhalb des Flansches zu gestatten.

2. Haltestiftsatz nach Anspruch 1, dadurch gekennzeichnet, daß die Durchflußausnehmungen (60) einander gegenüberliegend angeordnet sind.

3. Haltestiftsatz nach Anspruch 1 oder 2, dadurch gekennzeichnet, daß am Umfang der Mutter (32) axiale Keilnuten (56) angeordnet sind, in die zum Eindrehen der Mutter (32) ein Werkzeug axial einsetzbar ist.

4. Haltestiftsatz nach Anspruch 1, 2 oder 3, dadurch gekennzeichnet, daß der Stift (16) an seinem dem Basisteil (20) gegenüberliegenden Ende axiale Rillen (50) aufweist, die ein Fassen und Halten des Stiftes (16) gestatten, wenn die Mutter (32) eingedreht wird.

5. Haltestiftsatz nach Anspruch 4, dadurch gekennzeichnet, daß die Mutter (32) an ihrem freien, dem Randabschnitt (33) gegenüberliegenden Ende mit Verriegelungsausnehmungen (44) versehen und eine Verriegelungsbüchse (42) vorgesehen ist, die über das freie Ende des Stiftes (16) und der Mutter (32) paßt, wobei diese Verriegelungsbüchse (42) so gestaltet.ist, daß sie durch ein sich axial erstreckendes Betätigungswerkzeug in Lage gebracht werden kann und ferner Abschnitte aufweist, die in die Verriegelungsausnehmungen (44) der Mutter und in die Rillen (50) des Stiftes (16) gebördelt werden können und dabei die Mutter (32) am Stift (16) festlegen.

## Revendications

1. Dispositif de broche de retenue appropriée pour être fixée à des brides (14) de tubes de guidage pour barres de commande de réacteurs nucléaires, pourvus de passages (22) munis de chambrages (40) dont chacun a un diamètre prédéterminé et est approprié pour recevoir une partie de la broche (16) de retenue, ladite broche (16) de retenue possédant un collet intermédiaire (26) approprié pour être logé d'une façon ajustée dans ledit chambrage (40) de façon à être assemblé avec ladite bride de tube de guidage, une partie (20) de base s'étendant dans le sens axial à partir dudit collet (26) et étant appropriée pour être logée dans un alésage (18) ménagé dans un organe· sur lequel ladite bride (14) de tube de guidage doit être disposée, une tige (24) susceptible d'être mise sous contrainte, s'étendant à partir dudit collet (26) dans un sens axial opposé à ladite partie (20) de base et étant appropriée pour être logée dans l'un desdits passages (22) de la bride de tube de guidage, ladite partie formant tige (24) ayant un diamètre plus petit que celui desdits passages (22) de sorte qu'un espace annulaire de bride est formé entre ladite tige (24) et la paroi du passage ménagé dans la bride de. tube de guidage, ladite broche (16) possédant une partie filetée (30) formant goujon et appropriée pour recevoir un écrou (32) destiné à monter ladite broche (16) de retenue sur ladite bride (14) du tube de guidage, dans lequel ledit écrou (32) possède une jupe (33) en saillie dans le sens axial, dont le diamètre intérieur est plus grand que le diamètre de ladite tige (24) si bien qu'un espace annulaire d'écrou est formé entre ladite jupe (33) et ladite tige (24), espace annulaire d'écrou qui est en communication ouverte avec l'espace annulaire de bride lorsque ladite broche (16) est installée et que ladite jupe (33) de l'écrou repose sur ladite bride (14) de tube et des ouvertures (60) d'écoulement sont ménagées dans ladite jupe (33) de façon à permettre un échange de fluide de refroidissement dans ledit espace annulaire situé autour de ladite tige (24) à l'intérieur de ladite bride (14).

2. Dispositif selon la revendication 1, caractérisé en ce que lesdites ouvertures (60) d'écoulement sont disposées en face l'une de l'autre.

3. Dispositif selon la revendication 1 ou la revendication 2, caractérisé en ce que ledit écrou (32) possède des languettes (56) formées sur sa circonférence de façon à pouvoir être soumis à la prise d'un outil à engagement axial destiné à visser ledit écrou (32) vers le bas.

4. Dispositif selon l'une quelconque des revendications 1, 2 ou 3, caractérisé en ce que ladite broche (16) est pourvue de rainures axiales (50) formées à son extrémité opposée à sa partie (20) de base et qui permettent une prise sur ladite broche (16) pour retenir ladite broche (16) lorsque ledit écrou (32) est vissé vers le bas.

5. Dispositif selon la revendication 4. caractérisé en ce que ledit écrou (32) possède des ouvertures (44) de verrouillage ménagées à son extrémité axiale libre opposée à ladite jupe (33), et en ce qu'une cuvette (42) de verrouillage est prévue et constituée de façon à s'ajuster sur l'extrémité libre de ladite broche (16) et dudit écrou (32), ladite cuvette (42) de verrouillage étant appropriée pour être mise en place par un outil de manipulation s'étendant dans le sens axial et étant pourvue de parties appropriées pour être serties à l'intérieur desdites ouvertures (44) de verrouillage d'écrou et desdites rainures (50) de broche de manière à bloquer ledit écrou (32) sur ladite broche (16).